# EUROPEAN PATENT APPLICATION

(11) **EP 1 744 086 A1**
(43) Date of publication of application: **17.01.2007**
(21) Application number: 06008265.8
(22) Date of filing: 21.04.2006
(51) Int. Cl.: F16K 5/04, F16K 5/12

(54) **A device for regulating the flow rate of a liquid circulating in a boiler**

(30) Priority: 15.07.2005 IT PR20050036
(71) Applicant: Immergas S.p.A., 42041 Brescello (Reggio Emilia) (IT)
(72) Inventor: Benecchi, Alberto, 42041 Brescello (Reggio Emilia) (IT); Vecchi, Daniele, 43058 Sorbolo (Parma) (IT); Bertolotti, Riccardo, 43100 Parma (IT)
(74) Representative: Gotra, Stefano

(57) **Abstract**

A device (1) for regulating the flow rate of a sanitation liquid circulating in a boiler comprises a body (2) defining a passage for the liquid and having an inlet (3) and an outlet (4); a shutter element (6) defining at least one port (10) and movable within said passage in such a way that said port superposes said outlet, defining a passage section for the liquid flowing out; actuating means operatively active on said shutter element (6) to allow it to move from a closed position, correspondent to a minimum value of the passage section, to an open position, correspondent to a maximum value of the passage section, and vice versa, said port (10) being so shaped that the passage section of the outflowing liquid changes in non linear fashion with the displacement of the shutter element (6).

## Description

The present invention relates to a device for regulating the flow rate of a liquid circulating in a boiler, comprising:
- a body defining a passage for the liquid and having an inlet and an outlet;
- a shutter element defining at least one port and movable within said passage in such a way that said port superposes said outlet, defining a passage section for the liquid flowing out;
- actuating means operatively active on said shutter element to allow it to move from a closed position, correspondent to a minimum value of the passage section, to an open position, correspondent to a maximum value of the passage section, and vice versa.

Within the field of boilers for heating and producing sanitation water, it is known to use valves to deviate, mix or limit the flow of the sanitation liquid, as described for example in the Italian utility model IT 251348. Such valves, for instance solenoid valves, do not allow to regulate the flow rate of sanitation water, but only to deviate or limit a flow, with reduced control capability.

Also known are valves comprising a shutter that is able to move between a closed position and an open position. The displacement of the shutter, in the case of motorised valves, is generally performed by a stepping electric motor. Therefore, the shutter is subject to displacements of constant measure, said measure depending on the minimum step of the motor. In this light, note that the possibility of finely regulating the flow rate by reducing the size of the minimum displacement of the shutter clashes against the economic requirements linked with the cost of the stepping motor; in fact, the cost of a stepping motor increases greatly as its minimum step decreases. Actually, said valves allow only a highly coarse regulation.

Within the field of gas flow rate regulation, there are valves able to achieve a finer regulation than the aforementioned valves for liquids. For example, the valve described in EP 0612941 enables to vary gas flow rate in proportional fashion, and it is also able to achieve a non proportional regulation, according to an embodiment variant indicated in the aforementioned document. However, said gas flow rate regulating valves are not applicable to the case of boilers in which sanitation liquids circulate, because of the different pressures involved. In particular, in the valve described in EP 0612941 the shutter is constituted by a disk, internal to a chamber defined by the valve and actuated by a shaft, and this prevents from achieving a good seal. Moreover, known valves for regulating gas flow rates, when they are motorised, use synchronous motors, with controllable speed. Therefore, said valves do not solve the technical problem of assuring the possibility of effecting a more or less fine flow rate control according to the position of the shutter, having the capability of controlling the displacement rate of the shutter.

An object of the present invention is to eliminate the aforesaid drawbacks and to make available a device for regulating the flow rate of a sanitation liquid circulating in a boiler, simple and reliable even at high pressures and able to effect a fine, non proportional regulation of the flow rate, i.e. in such a way that to equal displacements of the shutter correspond different variations of the flow rate, i.e. of the outlet port.

Said objects are fully achieved by the apparatus of the present invention, which is characterised by the content of the claims set out below and in particular in that said port is so shaped that the passage section of the liquid flowing out varies in non linear fashion with the displacement of the shutter element.

This and other characteristics shall become more readily apparent in the description that follows of a preferred embodiment, illustrated purely by way of non limiting example in the accompanying drawing tables, in which:

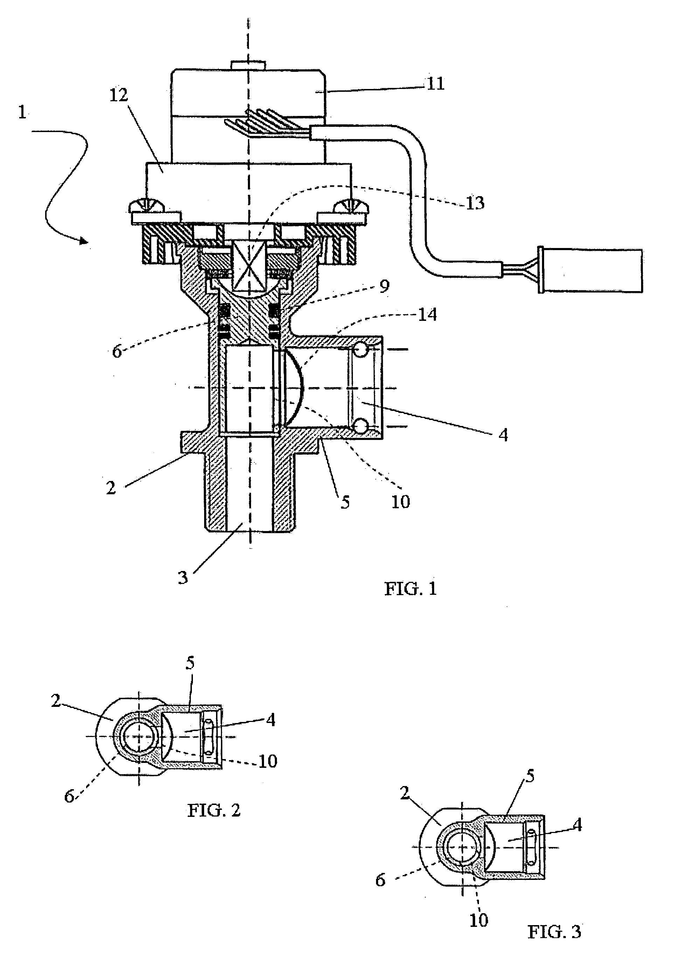

- Figure 1 shows a section view of a device according to the present invention;
- Figure 2 shows a top sectioned view of the device of Figure 1, in an open operative position;
- Figure 3 shows a top sectioned view of the device of Figure 1, in a closed operative position;
- Figure 4 shows a non sectioned side view of the device of Figure 1;
- Figure 5 shows a detail of the device of Figure 1;
- Figure 6 shows a non sectioned rotated view of the detail of Figure 5;
- Figure 7 shows a detail of Figure 4, in an open operative condition;
- Figure 8 shows a detail of Figure 4, in an intermediate operative condition;
- Figure 9 shows a detail of Figure 4, in a substantially closed operative condition;
- Figure 10 shows a device as in Figure 1, in a different embodiment;
- Figure 11 is a top section view of the device of Figure 10;
- Figure 12 is a top section view of an embodiment variant of the device of Figure 10;

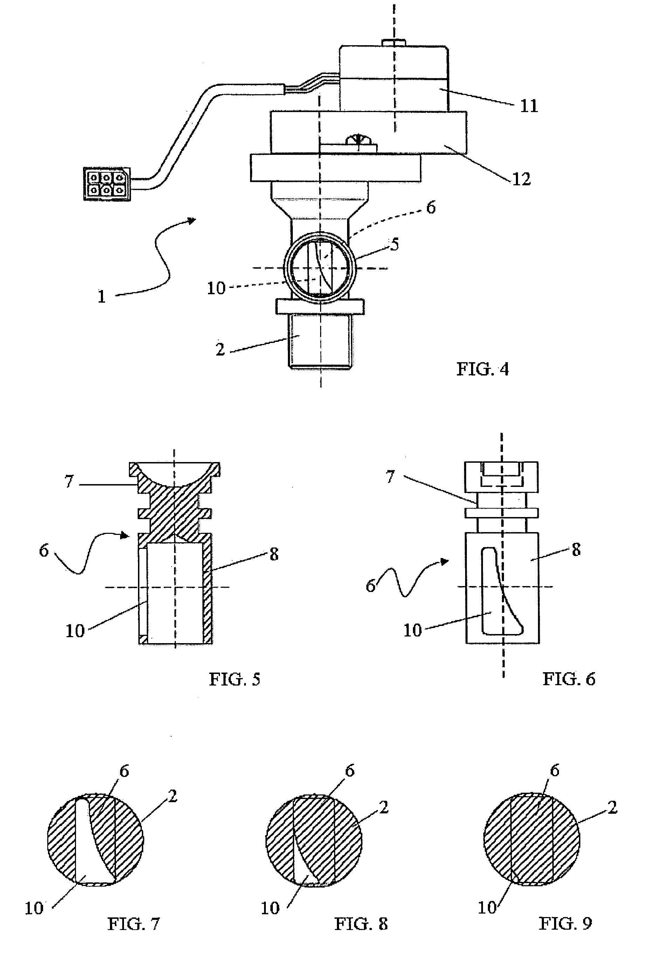

In the figures, the reference number 1 designates regulating device according to the present invention. The device 1 comprises a body 2, preferably made of brass. The body 2 is internally hollow and it defines a substantially cylindrical chamber, having a first axial opening and a second axial opening. Moreover, the body 2 defines a lateral opening. In this way, the body 2 defines a passage for a liquid. In particular, said first axial opening constitutes an inlet 3 for the liquid, whilst said lateral opening constitutes an outlet 4 for the liquid. In the illustrated embodiment, the body 2 also defines an expansion at said lateral opening. In the body 2 is inserted a shutter element 6, movable inside said chamber. The shutter element 6 is constituted by a hollow cylinder, having a base 7 and a lateral wall 8. The shutter element 6 is rotatably inserted in the body 2, so that the base 7 occludes said second axial opening, the shutter element 6 being coaxial relative to said chamber. In this way, the lateral wall 8 of the shutter element 6 is in sliding contact with at least a first portion of an inner surface of the body 2. The shutter element 6 is preferably made of brass. Moreover, in a preferred embodiment, the outer lateral surface of the lateral wall 8 of the shutter element 6, subject to said sliding contact, is subjected to a depositing of a layer of nickel and to a subsequent polishing. In this way, the friction between the body 2 and the shutter element 6 is reduced. The shutter element 6 effects a seal, preventing the liquid that flows in said passage from escaping from said second axial opening of the body 2. To improve said seal, the device 1 comprises sealing rings 9, housed in recesses defined by the base 7 of the shutter element 6. The shutter element 6 defines, on the lateral wall 8, a port 10, which can be superposed to the opening 4. The portion of port 10 superposed to the outlet 4 defines a passage section for the liquid flowing out of the device 1. As the position of the shutter changes, the portion of said port 10 superposed to the outlet 4 changes from a minimum value, corresponding to a closed operative condition of the device 1, to a maximum value, corresponding to an open operative condition of the device 1. In a preferred but not exclusive embodiment, said minimum value is not zero, to assure a minimum passage of liquid in the device 1 even in closed conditions, as shown in Figure 9, whilst said maximum value coincides with the passage section defined by the part 10. It should be noted that the shutter element provides a seal with respect to said second axial opening of the body 2, whilst it does not provide a seal with respect to said lateral opening of the body 2, defining the outlet 4 of the liquid from the device 1.

The device 1 comprises means for actuating the shutter element 6, preferably constituted by a gear motor. In particular, in the illustrated embodiment the device 1 comprises a stepping electric motor 11, operatively connected to the shutter element 6 through a reduction unit 12. The connection between said gear motor and the shutter element 6 preferably takes place through a rod like body 13, which engages in a recess defined by the base 7 of the shutter element 6.

The passage section of the fluid flowing out of the regulating device 1 is defined by the superposition of the port 10 of the shutter element 1 with the lateral opening defining the outlet 4. Therefore, the variation of said passage section corresponding to a given displacement of the shutter is determined by the shape of the port 10 and of the lateral opening. In the illustrated embodiment, the lateral opening has substantially rectangular shape, as in known solutions. On the contrary, the shape of the port 10 of the shutter element 6 originally is not rectangular, but contoured to optimise a flow rate control in a boiler for heating and for the production of sanitation liquid. In particular, the port 10 is so shaped that the passage section of the liquid flowing out changes in non linear fashion with the displacement of the shutter element. In particular, the port 10 is so shaped that, in the displacement of the shutter element 6 from the closed position to the open position, the passage section of the liquid flowing out increases more than proportionally, with respect to the displacement of the shutter. In a preferred embodiment, the port 10 is so shaped that the passage section of the liquid flowing out changes substantially according to a cubic law with the angular displacement of the shutter element 6.

The port 10 is shaped as a right triangle with radiused angles and curvilinear hypotenuse which occupies about half the surface area of the rectangular lateral opening.

Note that the shutter element 6, illustrated in detail in Figures 5 and 6, is able to move with continuity inside the body 2, assuming positions corresponding to any angle. However, the fact that the actuation means comprise a stepping motor enables the shutter element 6 to assume a plurality of substantially stable intermediate positions, between the open position and the closed position or vice versa, as schematically shown in Figures 7 through 9.

The reference number 14 designates an anti-noise grid of the lateral opening of the body 2, positioned at the outlet 4 to filter the out-flowing liquid.

It should be observed that the device 1 is able to provide a particularly fine regulation of the flow rate of a liquid when the shutter element 6 is in proximity to the closed position, with respect to the case in which the shutter element 6 is in proximity to the fully opened position.

The port 10 defines a total angle of opening, i.e. an angle whereby the shutter element 6 has to move from the closed position to the open position or vice versa.

The device 1 originally enables to provide a particularly fine regulation of the flow rate of the out-flowing liquid for a portion of the total angle of opening that is greater than one half. On the contrary, in a small portion of the total angle of opening, corresponding to the situation in which the shutter element is in proximity to the position of maximum opening, the regulation of the flow rate of the out-flowing liquid is particularly coarse. However, this is not a disadvantage in fact. In the regulation of boilers, a condition of total opening of the device 1, or conditions proximate thereto, are only exploited in the situations in which the pressure of the liquid flowing in (into the boiler and hence into the device 1) is particularly low. In such situations, which in fact are rather rare, a fine flow rate regulation is of no particular interest.

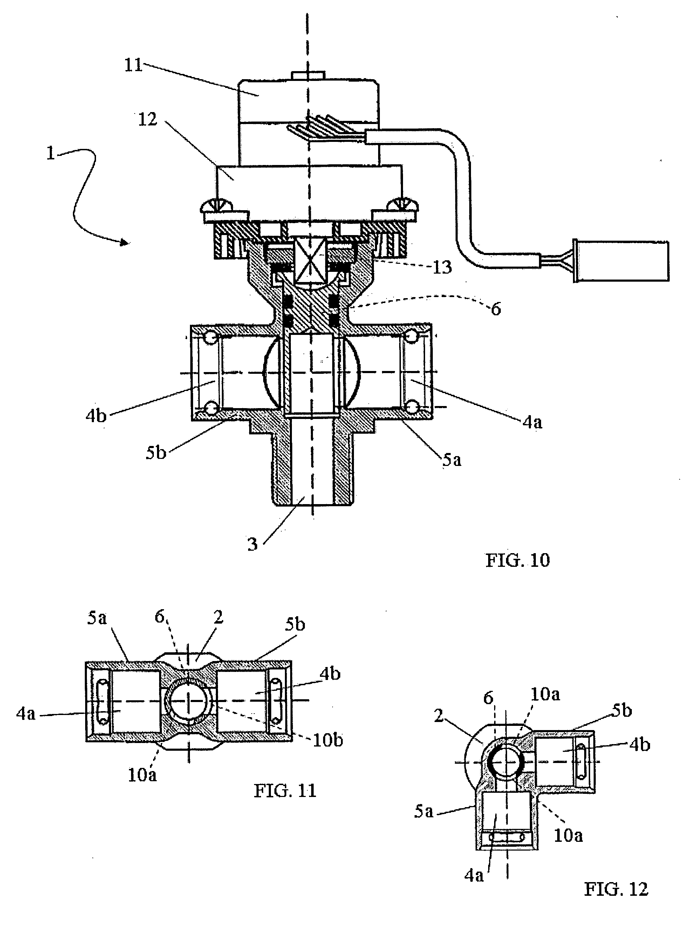

Figures 10 through 12 pertain to a device according to the present invention, but according to an embodiment that comprises two lateral openings in the body 2, defining two outlets 4. Correspondingly, the shutter element has two ports 10 in its lateral wall 8. In this way, the device 1 constitutes a three-way valve, having an inlet 3 and two outlets 4 for the liquid. Said lateral openings, with related expansions 5, can be located in various positions along the lateral surface of the body 2, depending on the needs of employment of the device 1 inside a boiler.

Figures 11 and 12 illustrate two different embodiments.

The device 1, in said three-way embodiment, defines a total passage section for the out-flowing liquid, given by the sum of a first passage section and a second passage section, each given by the superposition of a port 10 with a corresponding lateral opening.

In this way, to a given displacement of the shutter element corresponds a reduction of the first passage section and an expansion of the second passage section, or vice versa. Originally, said total passage section also remains constant, during the displacement of the shutter element. In this case, the device 1 is originally able to provide simultaneously a regulation and a mixing of the out-flowing liquid.

## Claims

1. A device (1) for regulating the flow rate of a sanitation liquid circulating in a boiler, comprising:
- a body (2) defining a passage for the liquid and having an inlet (3) and an outlet (4);
- a shutter element (6) defining at least one port (10) and movable within said passage in such a way that said port superposes said outlet, defining a passage section for the liquid flowing out;
- actuating means operatively active on said shutter element (6) to allow it to move from a closed position, correspondent to a minimum value of the passage section, to an open position, correspondent to a maximum value of the passage section, and vice versa,
**characterised in that** the port (10) is so shaped that the passage section of the liquid flowing out changes in non linear fashion with the displacement of the shutter element (6).

2. Device as claimed in claim 1, wherein the actuating means comprise a stepping electric motor (11).

3. Device as claimed in claim 1 or 2, wherein said body (2) internally defines a substantially cylindrical chamber, having a first axial opening for the entry of the liquid, a second axial opening in which is inserted the shutter element (6) and at least one lateral opening for the exit of the liquid.

4. Device as claimed in claim 3, wherein the shutter element (6) is constituted by a hollow cylindrical body rotatably housed within said chamber, having a lateral wall (8) in sliding contact with at least one inner portion of said body (2), in such a way as to be superposed to said at least one lateral opening of the body, and a base (7) able to seal said second axial opening of the body.

5. Device as claimed in claim 4, wherein the actuating means comprise a rod-like body (13) operatively connected to an electric motor (11) and engaged in a recess defined on said base (7) of the shutter element (6).

6. Device as claimed in claim 4 or 5, wherein said port (10) is defined on the lateral wall (8) of the shutter element (6), so that it faces said lateral opening or the body, according to an angular position of the shutter element (6).

7. Device as claimed in any of the previous claims, **characterised in that**, in the displacement of the shutter element (6) from the closed position to the open position, the passage section of the liquid flowing out increases more than proportionally, with respect to the displacement of the shutter (6).

8. Device as claimed in claim 7, **characterised in that**, in the displacement of the shutter element (6) from the closed position to the open position, the passage section of the liquid flowing out increases according to a substantially cubic law, with respect to the displacement of the shutter (6).

9. Device as claimed in any of the previous claims, **characterised in that** in the shutter element (6), in the movement from the open position to the closed position or vice versa, is able to assume a plurality of substantially stable intermediate positions.

10. Device as claimed in any of the previous claims, wherein the maximum value of the passage section for the out-flowing liquid coincides with the area defined by said port (10).

11. Device as claimed in any of the previous claims, wherein said body (2) has a first outlet (4a) and a second outlet (4a) and the shutter element defines a first port (10a) and a second port (10b), which can be superposed to said outlets.

12. Device as claimed in claim 11, **characterised in that** the passage section of the out-flowing liquid is given by the sum of the portions of said ports (10) superposed to the respective outlets (4).

13. Device as claimed in claim 11 or 12, **characterised in that** to a displacement of the shutter element (6) corresponds a closure of the first outlet and an opening of the second outlet (4) or vice versa.

14. Device as claimed in any of the previous claims, **characterised in that** said port (10) is so shaped as to allow a progressively finer flow rate regulation, as the shutter element (6) moves from the open position to the closed position.

15. Device as claimed in any of the previous claims, wherein the port (10) is shaped as a right triangle with radiused angles and curvilinear hypotenuse.

16. Boiler for heating and producing sanitation water, having means for regulating the flow rate of the liquid circulating in the boiler,
**characterised in that** said regulating means comprise a device (1) as claimed in any of the previous claims.
